# EUROPEAN PATENT SPECIFICATION

(11) **EP 2 645 159 B1**
(45) Date of publication and mention of the grant of the patent: **20.07.2016**
(21) Application number: 12199815.7
(22) Date of filing: 31.12.2012
(51) Int. Cl.: G02F 1/1335, F21V 8/00

(54) **Backlight unit and image display apparatus having the same**
Rückbeleuchtungseinheit und Bildanzeigevorrichtung damit
Unité de rétroéclairage et appareil d'affichage d'images doté de celle-ci

(30) Priority: 28.03.2012 KR 20120031715
(43) Date of publication of application: 02.10.2013
(73) Proprietor: Samsung Electronics Co., Ltd, Gyeonggi-do 443-742 (KR)
(72) Inventor: Hur, Gil-tae, Gwanak-gu Seoul (KR); Jang, Nae-won, Seongnam-si Gyeonggi-do (KR); Kim, Young-chul, Dongjak-gu Seoul (KR); Cho, Kun-ho, Suwon-si Gyeonggi-do (KR); Choi, Hyeong-sik, Hwaseong-si Gyeonggi-do (KR)
(74) Representative: Appleyard Lees IP LLP

(56) References cited:
- EP-A1- 2 343 582
- EP-A2- 2 192 430
- EP-A2- 2 317 355
- US-A1- 2008 151 579
- US-A1- 2009 097 277
- US-A1- 2009 237 957
- US-A1- 2011 273 642

## Description

### BACKGROUND

### 1. Field

Apparatuses and methods consistent with exemplary embodiments relate to a flat image display apparatus and, more particularly, to a backlight unit of a flat image display apparatus using a light guiding plate.

### 2. Description of the Related Art

A liquid crystal display apparatus displays images using a liquid crystal panel and is used in various display apparatuses such as televisions (TV), computer monitors, etc. The liquid crystal panel displays images by using liquid crystals which are a light receiving element that cannot emit light by itself. Therefore, the liquid crystal display apparatus needs a backlight unit which supplies light to the liquid crystal panel.

Accordingly, the liquid crystal display apparatus includes a liquid crystal panel assembly including the backlight unit and the liquid crystal panel. The backlight unit is disposed behind the liquid crystal panel. The backlight units are generally classified into an edge-lit backlight unit which needs the light guiding plate and a direct-lit backlight unit which does not need the light guiding plate. The direct-lit backlight unit in which a light source is disposed directly below the liquid crystal panel can operate without the light guiding plate. However, for displaying images with a good quality, it is difficult to make the liquid crystal display with the direct-lit backlight unit very thin. On the other hand, the edge-lit backlight unit, in which a light source is disposed at a side of the light guiding plate, allowing the liquid crystal display to be thinner.

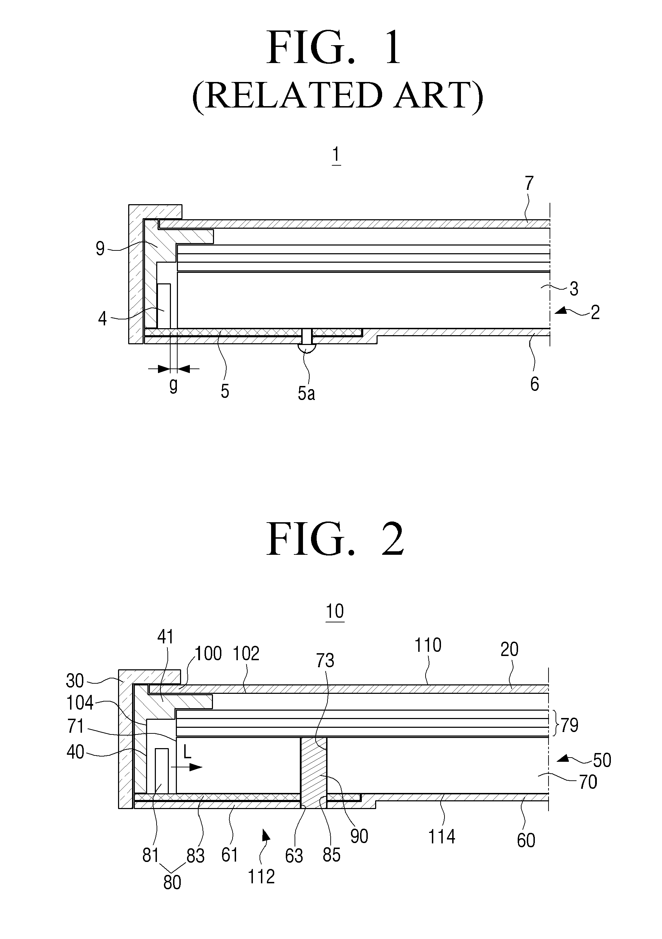

FIG. 1 illustrates a liquid crystal panel assembly 1 including a related art edge-lit backlight unit 2.

Referring to FIG. 1, a light guiding plate 3 is disposed on a top surface of an under chassis 6. A plurality of light sources 4 is disposed at a side of the light guiding plate 3. In other words, the plurality of light sources 4 is disposed in a space between a middle mold 9 and a side surface of the light guiding plate 3. Also, the plurality of light source 4 is disposed on a light source board 5, and the light source board 5 is fixed to the under chassis 6 by fastening members 5a such as screws, bolts, etc. To obtain good images, a constant gap g between the light sources 4 and the side surface of the light guiding plate 3 needs to be maintained. If the gap g between the light sources 4 and the side surface of the light guiding plate 3 varies, the quality of the image being displayed on the liquid crystal panel 7 may become poor.

When the liquid crystal apparatus is used in high temperature and high humidity environments, a phenomenon that the light guiding plate 3 is expanded may occur. If the light guiding plate 3 is expanded, the gap g between the light guiding plate 3 and the light sources 4 is decreased so that the quality of the images being displayed on the liquid crystal panel 7 may decrease. Further, if the amount of expansion of the light guiding plate 3 is large, the light sources 4 disposed at a side of the light guiding plate 3 may be crashed by the expanded side surface of the light guiding plate 3, thereby being damaged.

Therefore, there is a need for the backlight unit to be used in high temperature and high humidity environments, while maintaining the constant gap between the light sources and the light guiding plate.

US2009/0097277 shows a planar lighting device capable of keeping the light entrance plane of the light guide plate spaced a constant distance from the light source and the light guide plate spaced a constant distance from the liquid crystal display panel even when the light guide plate expands, contacts or warps. This prevents break of the light source, decrease of light admission efficiency, occurrence of uneven brightness, and break of the liquid crystal display panel and permits thin, larger, and lightweight design. The planar lighting device includes a fixing member for keeping them spaced from each other, a housing for accommodating the light source and the light guide plate, a sliding mechanism to elastically hold the fixing means against the housing while keeping the light source spaced a constant distance from the light guide plate, and a reinforcing member for reinforcing the housing.

EP2192430 shows a backlight unit and a display apparatus including the backlight unit are provided. The backlight unit includes: a light source unit (110) which includes at least on light source which emits light, and a gap (G1) maintaining unit; a light guiding plate (120) which guides the light emitted from the light source; and an elastic member (160) which elastically biases the light source unit toward the light guiding plate so that the gap maintaining unit maintains a gap (G1) between the light source and the light guiding plate.

US2009/0237957 shows an illumination device equipped with a light guide plate, a light source unit having a plurality of point like light sources for supplying light to the light guide plate and a light source holding member for holding the point like light sources, the light source unit being disposed to oppose an edge face of the light guide plate, and a housing for holding the light guide plate and the light source unit. The light source unit is constituted so as to be inserted in and extracted from the housing by a slide mechanism that can be slid along the edge face of the light guide plate, and the light source unit is equipped with a spacer for assuring gap between the edge face of the light sources at a slide insertion side end of the light source unit with respect to the housing when the light source unit is slidingly inserted in the housing.

EP2343582 shows a backlight unit. The backlight unit includes: a bottom sash; a light guide plate received by the bottom sash; a substrate on which a light emitting device is mounted, the light emitting device irradiating light to the light guide plate; a fixing member fixing the substrate; and a sliding moving part fixing the fixing member in such a manner that the fixing member moves with respect to the bottom sash.

EP2317355 A2 (Meitaku Industry Co Ltd), US 2011/273642 A1 (Kweon Toungmin) and US2008/151579 A1 (Kim Do Sung) describe further examples of the related art.

### SUMMARY

Examples of the present disclosure may address at least the above problems and/or disadvantages and other disadvantages not described above. Also, examples of the present disclosure are not required to overcome the disadvantages described above, and examples of the present disclosure may not overcome any of the problems described above.

According to the present invention there is provided an apparatus and method as set forth in the appended claims. Other features of the invention will be apparent from the dependent claims, and the description which follows. One or more exemplary embodiments provide a backlight unit which can maintain a constant width between a light source and a light guiding plate even if the dimension of the light guiding plate is changed and can prevent the light source from being damaged by the light guiding plate, and an image display apparatus having the same.

According to examples of the present disclosure, there may be provided a backlight unit, which may include a light guiding plate; a light source module that may be disposed in at least one side of the light guiding plate and includes a plurality of light sources emitting light toward a side surface of the light guiding plate; an under chassis supporting the light guiding plate and the light source module; and a gap maintaining unit constantly maintaining a gap between the side surface of the light guiding plate and the plurality of light sources of the light source module when a length of the light guiding plate is changed.

The gap maintaining unit may include a plurality of fixing members to fix the light guiding plate and the light source module to the under chassis.

The plurality of fixing members may include a plurality of studs fixed to a bottom surface of the under chassis, and the light guiding plate and the light source module may include a plurality of through holes into which the plurality of studs is inserted.

The gap maintaining unit may include fixing members to fix the light source module to the light guiding plate so that the light source module is moved integrally with the light guiding plate.

The fixing members may include anyone of studs, screws, or bolts; and the light source module may include through holes into which the fixing members are inserted.

The gap maintaining unit may include a gap making portion that is provided between the plurality of light sources of the light source module and the side surface of the light guiding plate and allows the plurality of light sources to be separated by a predetermined distance from the side surface of the light guiding plate; and a pressure member that is disposed between the under chassis and the light source module and pressurizes the light source module to the light guiding plate to allow the gap making portion to be maintained in contact with the side surface of the light guiding plate.

The gap making portion may be formed on a side surface of a light source mount of the light source module.

The gap making portion may be formed on the light source module separately from a light source mount of the light source module.

The pressure member may include a spring, an elastic member.

The pressure member may be disposed in a groove formed on the under chassis.

The light source module may be on opposite side surfaces of the light guiding plate.

### BRIEF DESCRIPTION OF THE DRAWINGS

The above and/or other aspects will become more apparent by describing certain exemplary embodiments, with reference to the accompanying drawings, in which:
FIG. 1 is a partially sectional view schematically illustrating a related art liquid crystal panel assembly;
FIG. 2 is a partially sectional view schematically illustrating a liquid crystal panel assembly according to an exemplary embodiment;
FIG. 3 is a view illustrating a light guiding plate and a light source module of the liquid crystal panel assembly of FIG. 2;
FIG. 4 is a partially sectional view schematically illustrating a liquid crystal panel assembly according to an example of the present disclosure;
FIG. 5 is a view illustrating a light guiding plate and a light source module of the liquid crystal panel assembly of FIG. 4;
FIG. 6 is a partially sectional view schematically illustrating a liquid crystal panel assembly according to an example of the present disclosure;
FIG. 7 is a partially sectional view illustrating the liquid crystal panel assembly of FIG. 6 taken along a line 7-7 in FIG. 6 for showing pressure members disposed in a groove formed on an under chassis;
FIG. 8 is a view illustrating a light guiding plate and a light source module of the liquid crystal panel assembly of FIG. 6;
FIG. 9 is a partially perspective view illustrating a portion of the light source module of the liquid crystal panel assembly of FIG. 6;
FIG. 10 is a view illustrating an example of a gap maintaining unit;
FIG. 11A is a view illustrating the liquid crystal panel assembly of FIG. 6 when a light guiding plate is not expanded;
FIG. 11 B is a view illustrating the liquid crystal panel assembly of FIG. 6 when a light guiding plate is expanded; and
FIG. 12 is a sectional view conceptually illustrating an image display apparatus using a backlight unit according to an example of the present disclosure.

### DETAILED DESCRIPTION

Certain examples are described in greater detail below with reference to the accompanying drawings.

In the following description, like drawing reference numerals are used for the like elements, even in different drawings. The matters defined in the description, such as detailed construction and elements, are provided to assist in a comprehensive understanding of examples of the present disclosure. However, examples of the present disclosure can be practiced without those specifically defined matters. Also, well-known functions or constructions are not described in detail since they would obscure the application with unnecessary detail. Further, dimensions of various elements in the accompanying drawings may be arbitrarily increased or decreased for assisting in a comprehensive understanding.

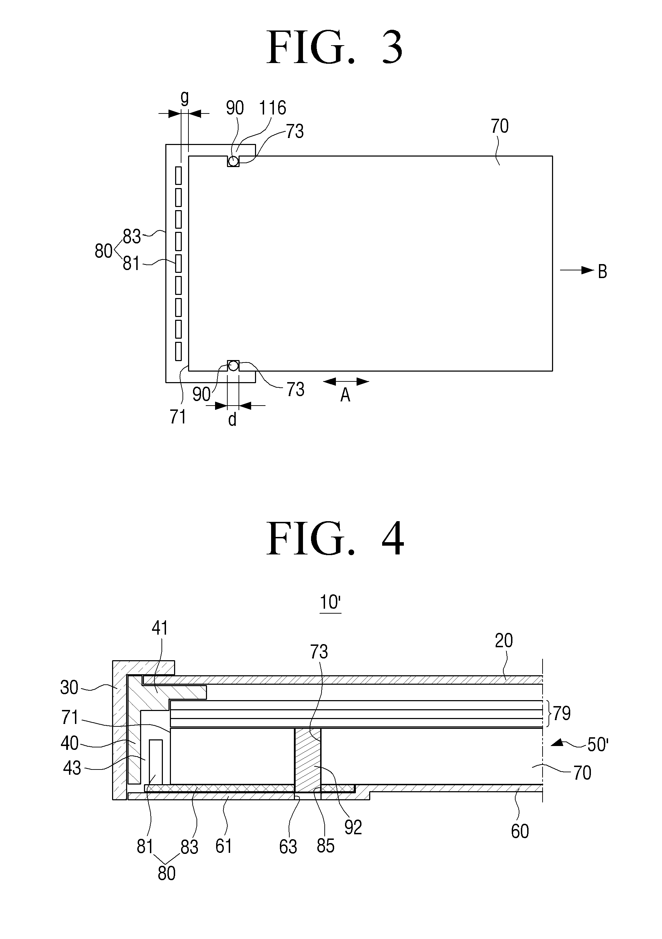

FIG. 2 is a partially sectional view schematically illustrating a liquid crystal panel assembly according to an exemplary embodiment, and FIG. 3 is a view illustrating a relationship between a light guiding plate and a light source module of the liquid crystal panel assembly of FIG. 2.

Referring to FIG. 2, the liquid crystal panel assembly 10 according to an exemplary embodiment may include a liquid crystal panel 20, an upper chassis 30, a middle mold 40, and a backlight unit 50.

The liquid crystal panel 20 displays color images by using light provided by the backlight unit 50. The liquid crystal panel 20 includes a color filter board (not illustrated) having a color filter layer and a thin film transistor board (not illustrated) having thin film transistors. A liquid crystal (not illustrated) is received between the color filter board and the thin film transistor board. A related art liquid crystal panel can be used as the liquid crystal panel 20 and, a detailed description of the liquid crystal panel 20 will be omitted.

The upper chassis 30 and the middle mold 40 fix and support the liquid crystal panel 20. The middle mold 40 may be formed in a substantially rectangular hollow frame shape. A protruding portion 41 supporting an edge portion 100 of a bottom surface 102 of the liquid crystal panel 20 is formed extending from a side surface 104 of the middle mold 40. The upper chassis 30 is disposed on a top side of the middle mold 40 and is formed substantially in the shape of the letter "L" to fix an edge portion 100 of a top surface 110 of the liquid crystal panel 20 positioned on the protruding portion 41 of the middle mold 40.

The backlight unit 50 is disposed below the liquid crystal panel 20 and supplies light to the liquid crystal panel 20. The backlight unit 50 may include an under chassis 60, a light guiding plate 70, a light source module 80, optical sheets 79, and a gap maintaining unit 90, i.e., a fixing member.

The under chassis 60 supports the light guiding plate 70 and the light source module 80 and has a space in which the light guiding plate 70 and the light source module 80 can be accommodated. A light source module receiving portion 61 which is bent and accommodates the light source module 80 is provided on an end portion 112 of the under chassis 60. Although not illustrated, if the light source module 80 is disposed on each of the opposite end portions of the light guiding plate 70, two light source module receiving portions 61 are provided on the under chassis 60.

The light guiding plate 70 minimizes loss of light L emitting from the light source module 80 disposed at a side of the light guiding plate 70, evenly disperses the light L to the entire surface of the liquid crystal panel 20, and collects the light L in the same direction. The light guiding plate 70 is formed in a rectangular shape, has a size corresponding to the liquid crystal panel 20, and is disposed on a top surface of the under chassis 60. At least two first through holes 73 may be formed on the light guiding plate 70. Referring to FIG. 3, in the present exemplary embodiment, two first through holes 73 are formed near one side surface 71 of the light guiding plate 70. The first through holes 73 are formed in a groove shape so that one side surface 116 of the first through hole 73 is open.

The light source module 80 is disposed at a side of the light guiding plate 70, and includes a plurality of light sources 81 emitting light L toward the light guiding plate 70 and a light source board 83 on which the plurality of light sources 81 is disposed and an electric circuit to drive the plurality of light sources 81 is provided. The plurality of light sources 81, as illustrated in FIG. 3, is disposed on the light source board 83 to form a straight line parallel to the side surface 71 of the light guiding plate 70. The light source board 83 may be formed of aluminum. The plurality of light sources 81 may use light emitting diodes (LEDs) or cold cathode fluorescent lamps (CCFLs). Although the backlight units using LEDs as the light sources 81 are described in detail below, this is not limited thereto.

The optical sheets 79 are disposed on a front surface of the light guiding plate 70, proximate the liquid crystal panel 20. The optical sheets 79 minimize waste of light by refraction and reflection of the light, improve brightness of the light emitting through the light guiding plate 70, and evenly disperse the light. The optical sheets 79 may include a diffuser sheet to evenly diffuse light, a prism sheet to refract light and enhance brightness, and a dual brightness enhancement film (DBEF) to selectively transmit and reflect light so as to enhance brightness. The optical sheets 79 may be the same as the optical sheets used in the related art backlight unit 2, and detailed description thereof will be omitted.

Although the length of the light guiding plate 70 is increased or reduced, the gap maintaining unit 90 allows the gap g between the plurality of light sources 81 and the side surface 71 of the light guiding plate 70 to be maintained at a constant width. The gap maintaining unit 90 may be formed as a plurality of fixing members to fix the light source module 80 and the light guiding plate 70 integrally to the under chassis 60. The fixing member 90 may be formed as a stud having a cylindrical shape which may be fixed to the under chassis 60.

As illustrated in FIGS. 2 and 3, the light source module receiving portion 61 of the under chassis 60 is provided with a plurality of second through holes 63 into which the fixing member 90 can be inserted, the light source module 80 is provided with a plurality of third through holes 85 into which the fixing member 90 can be inserted, and the light guiding plate 70 is provided with a plurality of first through holes 73 into which the fixing member 90 can be inserted. The third and first through holes 85 and 73 formed in the light source module 80 and the light guiding plate 70 may be formed to have a dimension such that after the fixing members 90 are inserted in the third and first through holes 85 and 73, the light source module 80 and the light guiding plate 70 are not moved in the lengthwise direction (a direction of arrow A) of the light guiding plate 70. In other words, the dimensions of the fixing members 90 and the third and first through holes 85 and 73 may be determined so that after the fixing members 90 are inserted in the third through holes 85 of the light source module 80 and the first through hole 73 of the light guiding plate 70, the light guiding plate 70 and the light source module 80 do not move with respect to the fixing member 90. Also, if the first through holes 73, as illustrated in FIG. 3, are formed in a groove shape, a distance d between opposite side surfaces of the first through holes 73 may be determined so that the light guiding plate 70 does not move with respect to the fixing member 90 in the direction of arrow A.

After the plurality of second, third, and first through holes 63, 85 and 73 are aligned with each other, and then, the fixing member 90 is inserted into the second, third and first through holes 63, 85 and 73, the light guiding plate 70 and the light source module 80 are fixed to the under chassis 60 and do not move with respect to the under chassis 60. As a result, the light guiding plate 70, the light source module 80, and the under chassis 60 form a single body so that even when, due to expansion or contraction of the light guiding plate 70, the length of the light guiding plate 70 is increased or reduced, the gap g between the plurality of light sources 81 of the light source module 80 and one side surface 71 of the light guiding plate 70 is not changed but constantly maintained. When the light guiding plate 70 is expanded, a side surface of the light guiding plate 70 which does not face the light source module 80 is increased in a direction of arrow B of FIG. 3. Accordingly, a space that can absorb the expansion of the light guiding plate 70 is provided in the other side of the under chassis 60 in which the light source module 80 is not disposed.

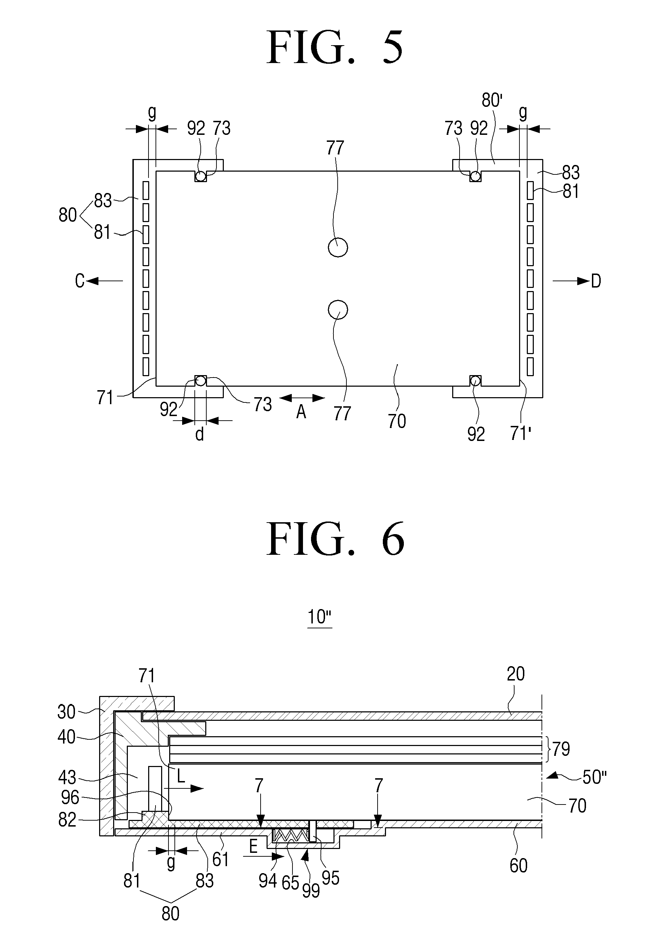

Hereinafter, referring to FIGS. 4 and 5, a liquid crystal panel assembly 10' including a backlight unit 50' according to other examples of the present disclosure will be described.

FIG. 4 is a partially sectional view schematically illustrating a liquid crystal panel assembly 10' including a backlight unit 50' according to an example of the present disclosure, and FIG. 5 is a view illustrating a relationship between a light guiding plate 70 and a light source module 80 of the liquid crystal panel assembly 10' of FIG. 4.

Referring to FIG. 4, the liquid crystal panel assembly 10' according to an example of the present disclosure may include a liquid crystal panel 20, an upper chassis 30, a middle mold 40, and a backlight unit 50'. The liquid crystal panel 20, the upper chassis 30, and the middle mold 40 are the same as those of the liquid crystal panel assembly 10 according to the above-described example; therefore, detailed descriptions thereof will be omitted.

The backlight unit 50' is disposed below the liquid crystal panel 20, and supplies light to the liquid crystal panel 20. The backlight unit 50' may include an under chassis 60, a light guiding plate 70, a light source module 80, optical sheets 79, and a gap maintaining unit 92. The backlight unit 50' according to the present example of the present disclosure is similar to the backlight unit 50 as described above. In other words, structures and functions of the under chassis 60, the light guiding plate 70, the light source module 80, and the optical sheets 79 are the same as those of the under chassis 60, the light guiding plate 70, the light source module 80, and the optical sheets 79 of the backlight unit 50 as described above. However, there is a difference that only the light guiding plate 70 and the light source module 80 are integrally fixed by the gap maintaining unit 92, and the under chassis 60 is not fixed integrally with the light guiding plate 70 and the light source module 80.

Referring to FIG. 4, the gap maintaining unit 92 may include a plurality of fixing members that fix the light source module 80 integrally to a side of the light guiding plate 70 and may be formed as one or more studs having a cylindrical shape.

The light source module 80 is provided with a plurality of third through holes 85 into which the fixing member 92 can be inserted, and the light guiding plate 70 is provided with a plurality of first through holes 73 into which the fixing member 92 can be inserted. The third and first through holes 85 and 73 may be formed to have a dimension such that after the fixing member 92 is inserted in the third and first through holes 85 and 73, the light source module 80 and the light guiding plate 70 are not moved with respect to the fixing member 92 in the lengthwise direction of the light guiding plate 70 so that when the one side surface 71 of the light guiding plate 70 is moved to the lengthwise direction thereof (a direction of arrow A), the light source module 80 also is moved by the same distance and in the same direction as the movement of the light guiding plate 70. In other words, the dimensions of the third and first through holes 85 and 73 and the fixing member 92 may be determined so that when the fixing member 92 is inserted in the third through holes 85 of the light source module 80 and the first through holes 73 of the light guiding plate 70, the light source module 80 is not moved in the direction of arrow A. Also, if the first through holes 73 formed on the light guiding plate 70 are formed in a groove shape having one open side as illustrated in FIG. 5, a distance d between opposite side surfaces of the first through holes 73 may be determined so that the light guiding plate 70 does not move with respect to the fixing member 92 in the direction of arrow A.

The under chassis 60 may be provided with second through holes 63 through which the fixing member 92 can be inserted into the third through holes 85 of the light source module 80 and the first through holes 73 of the light guiding plate 70.

A space 43 is formed between the middle mold 40 and the plurality of light sources 81 of the light source module 80 so that when the light guiding plate 70 is expanded, the light source module 80 can be moved therein. The width of the space 43 may be determined to accommodate the maximum length to which the light guiding plate 70 may expand.

The gap maintaining unit 92 according to the present example of the present disclosure may be applied to the backlight unit 50' having the light source modules 80 and 80' disposed on the opposite sides of the light guiding plate 70 as illustrated in FIG. 5. The light guiding plate 70 is fixed to the under chassis 60 by at least two light guiding plate fixing members 77 disposed in a center portion 120 thereof. As a result, when the light guiding plate 70 is expanded due to surrounding environments, the opposite side surfaces 71 and 71' of the light guiding plate 70 are increased in the left and right directions (directions of arrows C and D). In the present example of the present disclosure, since the light source modules 80 and 80' are fixed to move integrally with the light guiding plate 70, even when the opposite side surfaces 71 and 71' of the light guiding plate 70 are increased in the left and right directions, the gap g between the side surface 71 or 71' of the light guiding plate 70 and the plurality of light sources 81 of the light source module 80 or 80', respectively, is maintained to be of a constant width.

Hereinafter, referring to FIGS. 6 to 9, a liquid crystal panel assembly 10" including a backlight unit 50" according to another example of the present disclosure will be described.

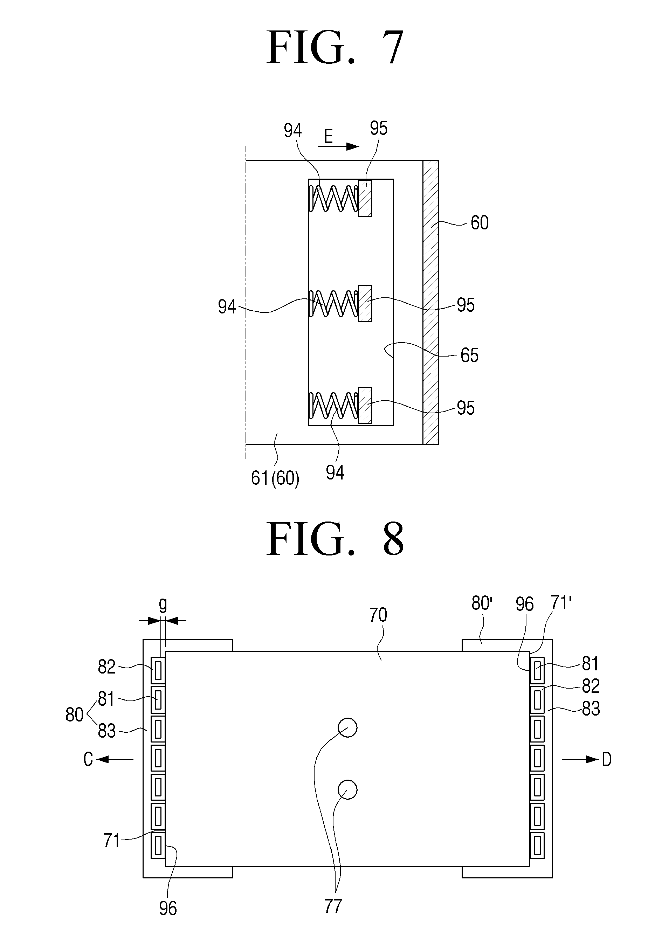

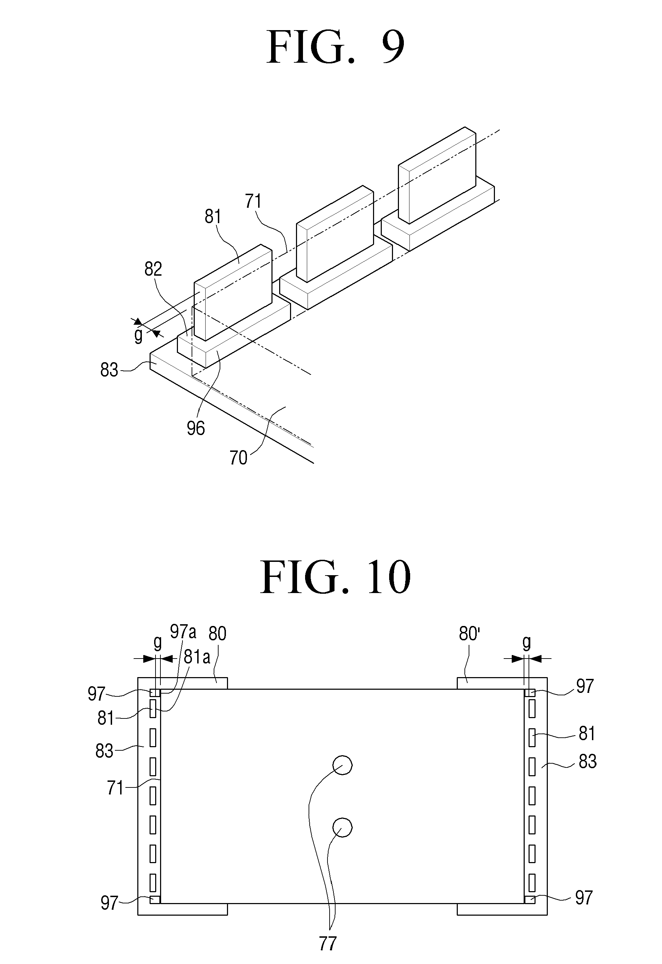

FIG. 6 is a partially sectional view schematically illustrating a liquid crystal panel assembly 10" including a backlight unit 50" according to an example of the present disclosure, and FIG. 7 is a partially sectional view illustrating the liquid crystal panel assembly of FIG. 6 taken along a line 7-7 in FIG. 6 for showing pressure members disposed in a groove formed on an under chassis 60. Also, FIG. 8 is a view illustrating a relationship between a light guiding plate 70 and a light source module 80 of the liquid crystal panel assembly 10" of FIG. 6. FIG. 9 is a partially perspective view illustrating a portion of the light source module 80 of the liquid crystal panel assembly 10" of FIG. 6.

Referring to FIG. 6, the liquid crystal panel assembly 10" according to an example of the present disclosure may include a liquid crystal panel 20, an upper chassis 30, a middle mold 40, and a backlight unit 50". The liquid crystal panel 20, the upper chassis 30, and the middle mold 40 are the same as those of the liquid crystal panel assembly 10 according to the above example of the present disclosure; therefore, detailed descriptions thereof will be omitted.

The backlight unit 50" is disposed below the liquid crystal panel 20, and supplies light to the liquid crystal panel 20. The backlight unit 50" may include an under chassis 60, a light guiding plate 70, a light source module 80, optical sheets 79, and a gap maintaining unit 99. The backlight unit 50" according to the present example is similar to the backlight unit 50' as described above. In other words, structures and functions of the under chassis 60, the light guiding plate 70, the light source module 80, and the optical sheets 79 are the same as the under chassis 60, the light guiding plate 70, the light source module 80, and the optical sheets 79 of the backlight unit 50' as described above. However, the gap maintaining unit 99 is different from the gap maintaining unit 92 of the backlight unit 50'.

Referring to FIGS. 6 and 7, the gap maintaining unit 99 may include a gap making portion 96 and at least one pressure member 94. The gap making portion 96 is provided between the plurality of light sources 81 of the light source module 80 and the side surface 71 of the light guiding plate 70 and allows the plurality of light sources 81 to be spaced a predetermined distance apart from the side surface 71 of the light guiding plate 70. Accordingly, when the side surface 71 of the light guiding plate 70 is in contact with the gap making portion 96, the gap g between the plurality of light sources 81 and the side surface 71 of the light guiding plate 70 becomes a dimension determined during a design process thereof. The gap making portion 96 may be formed on either of the light source module 80 or the light guiding plate 70. In the present example, the gap making portion 96 is provided with the light source module 80 for manufacturing convenience.

Referring to FIGS. 6, 8 and 9, the gap making portion 96 is provided on a side surface of a light source mount 82 formed on a light source board 83 of the light source module 80. The light source mount 82 is to mount the plurality of light sources 81. The light source mounts 82 are formed to correspond to the number of the light sources 81 and project upward from the light source board 83. Accordingly, one side surface of the light source mount 82 may be machined to form the gap making portion 96. If the machined surface of the light source mount 82, that is the gap making portion 96, is in contact with the side surface 71 of the light guiding plate 70, the plurality of light sources 81 and the side surface 71 of the light guiding plate 70 are parallel to each other, and the gap g between the plurality of light sources 81 and the side surface 71 of the light guiding plate 70 becomes a dimension determined during a design process thereof.

Alternatively, as illustrated in FIG. 10, gap making portions 97 may not use the plurality of light source mounts 82, but be formed on the light source board 83 separately from the light source mounts 82.

Referring to FIG. 10, the gap making portions 97 are disposed at opposite ends of the plurality of light sources 81 of the light source modules 80 and 80'. The gap making portion 97 is formed in a protrusion projecting upwardly from the light source board 83. One surface of the protrusion 97 is machined parallel to light emitting surfaces 81a of the plurality of light sources 81. Further, the first surface 97a of the protrusion 97 is machined so that a gap between the light emitting surfaces 81a of the plurality of light sources 81 and the first surface 97a of the protrusion 97 is a dimension of the gap g between the light sources 81 and the side surface 71 of the light guiding plate 70 determined by design. As a result, as illustrated in FIG. 10, when the side surface 71 of the light guiding plate 70 is in contact with the first surface 97a of the protrusion 97, the gap g between the plurality of light sources 81 and the side surface 71 of the light guiding plate 70 becomes the dimension determined by design.

Referring to FIGS. 6, 7 and 8 again, the pressure member 94 allows the gap making portion 96 of the light source module 80 to keep in contact with the side surface 71 of the light guiding plate 70 and is disposed between the under chassis 60 and the light source module 80. In other words, the pressure member 94 pressurizes the light source module 80 to the side surface 71 of the light guiding plate 70 so that the gap making portion 96 keeps in contact with the one side surface 71 of the light guiding plate 70. As a result, the gap g between the plurality of light sources 81 of the light source module 80 and the side surface 71 of the light guiding plate 70 is maintained to be of a constant width.

As illustrated in FIGS. 6 and 7, the pressure member 94 is disposed in a groove 65 formed on the under chassis 60. In order to uniformly pressurize the light source module 80, a plurality of pressure members 94 may be disposed in a width direction of the light guiding plate 70.

Referring to FIG. 7, three pressure members 94 are disposed to pressurize three pressure projections 95 of the light source module 80. The pressure member 94 may be variously formed as long as the pressure member 94 can pressurize the light source module 80 in one direction. For example, the pressure member 94 may be an elastic member such as a coil spring, a plate spring, a rubber, etc. In FIGS. 6 and 7, the coil springs are used as the pressure member 94.

Referring to FIGS. 6 and 7, one end of the pressure member 94 is fixed to the pressure projection 95 projecting downward from the light source module 80 and the other end of the pressure member 94 is fixed to a side wall of the groove 65 formed on the under chassis 60. Accordingly, the pressure member 94 is applying a force to the pressure projection 95 in a direction of arrow E. Since the light source module 80 also receives a force in the direction of arrow E by the pressure member 94, the gap making portion 96 formed on the light source module 80 keeps in contact with the one side surface 71 of the light guiding plate 70. A bottom surface of the light source module 80 and a top surface of the under chassis 60 may be formed so that the light source module 80 can smoothly slide with respect to the top surface of the under chassis 60.

The pressure projection 95 is formed to project downward from the bottom surface of the light source board 83 of the light source module 80, and is inserted in the groove 65 formed on the under chassis 60. The pressure projection 95 may be formed to have a narrow width and the number of the pressure projections 95 may correspond to the number of the pressure members 94. For example, screws or bolts, which are tightened to the light source board 83, may be used as the pressure projections 95. Alternatively, although not illustrated, the pressure projection 95 may be a single projection having a length corresponding to the length of the light source module 80, and the plurality of pressure members 94 may pressurize the single pressure projection 95.

The gap maintaining unit 99 according to the present example may be applied to the backlight unit 50" having light source modules 80 and 80' disposed on the opposite sides of the light guiding plate 70 as illustrated in FIG. 8. At this time, the light guiding plate 70 is fixed to the under chassis 60 by at least two light guiding plate fixing members 77 disposed in a center thereof. Accordingly, when the light guiding plate 70 is expanded by surrounding environments, the opposite side surfaces 71 and 71' of the light guiding plate 70 are increased in the left and right directions (directions of arrows C and D). In the present example, since the gap making portion 96 of the light source modules 80 and 80' is kept in contact with the side surfaces 71 and 71' of the light guiding plate 70 by the pressure member 94, even when the opposite side surfaces 71 and 71' of the light guiding plate 70 are increased in the left and right directions, the gap g between the respective side surface 71 or 71' of the light guiding plate 70 and the plurality of light sources 81 of the light source modules 80 and 80' is maintained.

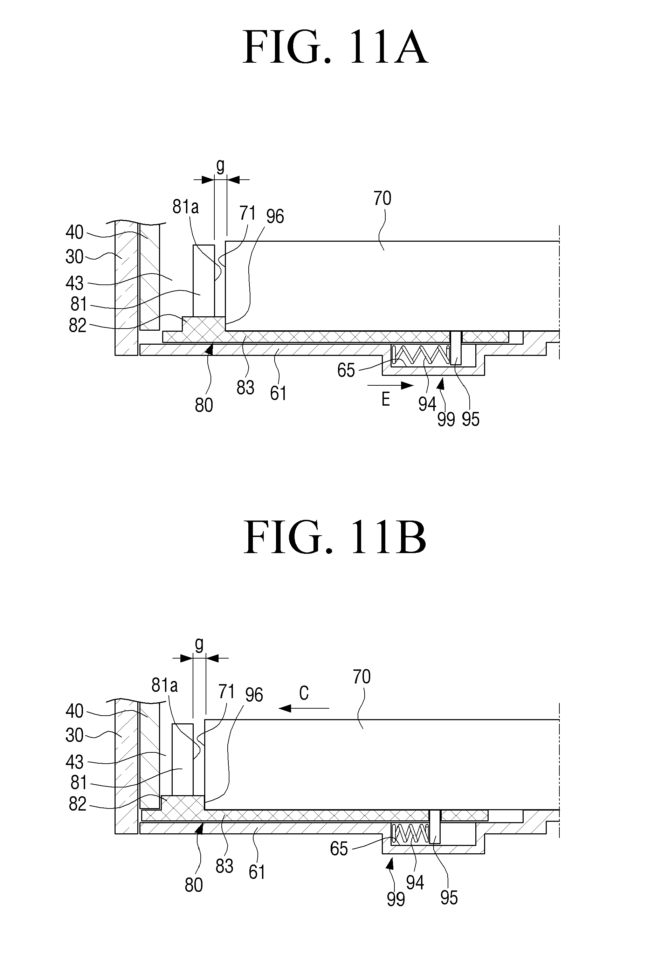

Hereinafter, referring to FIG. 11A and 11B, operation of the gap maintaining unit 99 that maintains the gap g between the plurality of light sources 81 and the one side surface 71 of the light guiding plate 70 will be described.

FIG. 11A is a view illustrating the gap maintaining unit 99 of the liquid crystal panel assembly 10" of FIG. 6 when the light guiding plate 70 is not expanded, and FIG. 11 B is a view illustrating the gap maintaining unit 99 of the liquid crystal panel assembly 10" of FIG. 6 when the light guiding plate 70 is expanded.

When the light guiding plate 70 is not expanded or contracted due to the surrounding environment, as illustrated in FIG. 11A, since the pressure member 94 pressurizes the pressure projection 95 of the light source module 80 in the direction of arrow E, the gap making portion 96 of the light source module 80 contacts the side surface 71 of the light guiding plate 70. Accordingly, the gap g between the plurality of light sources 81 of the light source module 80 and the side surface 71 of the light guiding plate 70 is maintained by a predetermined dimension.

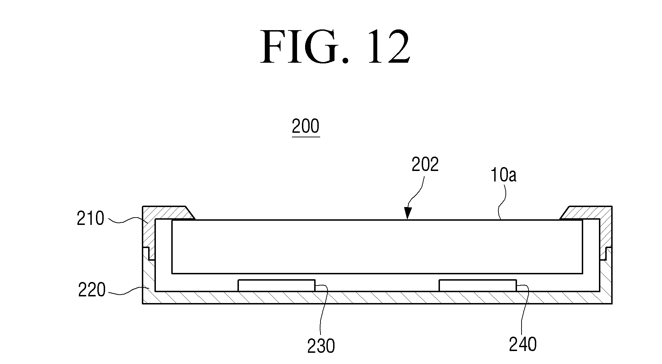

If an image display apparatus 200 (see FIG. 12) is used in high-temperature and high-humidity environment, the light guiding plate 70 may be expanded. When the light guiding plate 70 is expanded, the side surface 71 of the light guiding plate 70 is moved in a direction of arrow C as illustrated in FIG. 11 B. Since the gap making portion 96 receives a force by the light guiding plate 70, the light source module 80 also is moved in the direction of arrow C along with the one side surface 71 of the light guiding plate 70. When the light source module 80 is moved in the direction of arrow C, the pressure member 94 disposed in the groove 65 of the under chassis 60 receives a force by the pressure projection 95, and is compressed as illustrated in FIG. 11 B.

After that, when the light source module 80 is restored to an original state, the light source module 80 receives a force in the direction of arrow E by a restoring force of the pressure member 94. As a result, the gap making portion 96 of the light source module 80 keeps in contact with the one side surface 71 of the light guiding plate 70 and is restored to an original state.

In the backlight unit 50" according to an example of the present disclosure, even when the length of the light guiding plate 70 is reduced due to the surrounding environment, since the pressure member 94 pressurizes the light source module 80, the gap making portion 96 of the light source module 80 can keep in contact with the side surface 71 of the light guiding plate 70. Accordingly, even when the length of the light guiding plate 70 is reduced, the gap g between the light source 81 and the one side surface 71 of the light guiding plate 70 can be maintained constant.

Since the backlight unit 50" according to the present disclosure is formed so that the gap making portion 96 of the light source module 80 is in close contact with the side surface 71 of the light guiding plate 70 by the pressure member 94, even when the light guiding plate 70 is expanded or contracted due to surrounding environment, the gap g between the plurality of light sources 81 of the light source module 80 and the side surface 71 of the light guiding plate 70 can be maintained per the original design dimension.

FIG. 12 is a sectional view conceptually illustrating an image display apparatus using a backlight unit according to an exemplary embodiment.

FIG. 12 shows a liquid crystal display television (LCD TV) as one example of the image display apparatus 200. However, the present disclosure can be applied to other types of flat image display apparatuses, such as computer monitors, etc.

The image display apparatus 200 includes an upper housing 210 and an under housing 220. The liquid crystal panel assembly 202, which may include the liquid crystal panel assembly 10, 10' or 10" according to an exemplary embodiment described above, is received inside the upper and under housings 210 and 220.

As described above, the backlight unit 50, 50' or 50" of the liquid crystal panel assembly 10, 10' or 10" may include a gap maintaining unit 90, 92 or 99 allowing the gap g between the one side surface 71 of the light guiding plate 70 and the plurality of light sources 81 of the light source module 80 to be maintained at a constant width.

A power board 230 to supply electric power to the image display apparatus 200 and a control board 240 to control operation of the image display apparatus 200 are arranged behind the liquid crystal panel assembly 10, 10' or 10". Although FIG. 12 illustrates only the power board 230 and the control board 240, the image display apparatus 200 can additionally include other printed circuit boards for other functions.

As described above, even if the dimension of the light guiding plate 70 is increased or reduced, the gap g between the plurality of light sources 81 of the light source module 80 and the side surface 71 of the light guiding plate 70 is maintained at a constant width by providing the backlight unit 50, 50' and 50" formed so that the light source module 80 is fixed to the under chassis 60 along with the light source module 80 or including the gap maintaining unit 92 and 99 that allows the light source module 80 to move integrally with the light guiding plate 70 is disposed in the liquid crystal panel assembly 10, 10' and 10". Accordingly, the image display apparatus 200 of FIG. 12 including the liquid crystal panel assembly 10, 10', or 10" does not get broken down due to the surrounding environment.

Although a few examples have been shown and described, it will be appreciated by those skilled in the art that changes may be made in the examples without departing from the principles of the invention, the scope of which is defined in the appended claims and their equivalents.

## Claims

1. A backlight unit (50) comprising:
a light guiding plate (70);
a light source module (80) including a plurality of light sources (81) emitting light toward a side surface (71) of the light guiding plate;
an under chassis (60) supporting the light guiding plate and the light source module; and
a gap maintaining unit (90) maintaining a gap of a constant width between the side surface of the light guiding plate and the plurality of light sources of the light source module when a length of the light guiding plate is changed;
wherein the gap maintaining unit comprises a plurality of fixing members to fix the light guiding plate and the light source module to the under chassis, wherein
the plurality of fixing members (90) comprises a plurality of studs fixed to a bottom surface of the under chassis (60),
wherein the light guiding plate (70) and the light source module (80) comprises a
plurality of through holes (63, 85, 73) into which the plurality of studs is inserted,
**characterized in that**:
the light source module is disposed only at one side of the light guiding plate, and the gap maintaining unit comprises a plurality of fixing members to fix the light guiding plate and the light source module to the under chassis, wherein
the plurality of fixing members (90) comprises a plurality of studs fixed to a bottom surface of the under chassis (60).
wherein the light guiding plate (70) and the light source module (80) comprises a plurality of through holes (63, 85, 73) into which the plurality of studs is inserted
wherein
the gap maintaining unit (90) fixing members are only provided towards the end of the light guiding plate adjacent the light source module such that
a side surface of the light guiding plate which does not face the light source module (80) is arranged to expand in the lengthwise direction (B).

2. An image display apparatus (10) comprising:
a liquid crystal panel (20);
an upper chassis (30) and a middle mold (40) to fix and support the liquid crystal panel (20);
wherein a backlight unit (50) according to claim 1 is disposed below the liquid crystal panel (20) and emits light to the liquid crystal panel (20).

## Patentansprüche

1. Rückbeleuchtungseinheit (50), aufweisend:
eine Lichtleiterplatte (70);
ein Lichtquellenmodul (80), das mehrere Lichtquellen (81) enthält, die Licht zu einer Seitenfläche (71) der Lichtleiterplatte ausstrahlen;
ein Untergestell (60), das die Lichtleiterplatte und das Lichtquellenmodul trägt; und
einen Abstandhalter (90), der einen Spalt konstanter Breite zwischen der Seitenfläche der Lichtleiterplatte und den mehreren Lichtquellen des Lichtquellenmoduls aufrechterhält, wenn eine Länge der Lichtleiterplatte geändert wird;
wobei der Abstandhalter mehrere Befestigungselemente zum Befestigen der Lichtleiterplatte und des Lichtquellenmoduls am Untergestell aufweist, wobei
die mehreren Befestigungselemente (90) mehrere Stifte aufweisen, die an einer Bodenfläche des Untergestells (60) befestigt sind,
wobei die Lichtleiterplatte (70) und das Lichtquellenmodul (80) mehrere Durchgangslöcher (63, 85, 73) aufweisen, in welche die mehreren Stifte eingesetzt sind,
**dadurch gekennzeichnet, dass**:
das Lichtquellenmodul nur an einer Seite der Lichtleiterplatte angeordnet ist und der Abstandhalter mehrere Befestigungselemente aufweist, um die Lichtleiterplatte und das Lichtquellenmodul am Untergestell zu befestigen, wobei
die mehreren Befestigungselemente (90) mehrere Stifte aufweisen, die an einer Bodenfläche des Untergestells (60) befestigt sind,
wobei die Lichtleiterplatte (70) und das Lichtquellenmodul (80) mehrere Durchgangslöcher (63, 85, 73) aufweisen, in welche die mehreren Stifte eingesetzt sind,
wobei
die Befestigungselemente des Abstandhalters (90) nur zum Ende der Lichtleiterplatte neben dem Lichtquellenmodul bereitgestellt sind, so dass
eine Seitenfläche der Lichtleiterplatte, die dem Lichtquellenmodul (80) nicht zugewandt ist, so angeordnet ist, dass sie sich in die Längenrichtung (B) ausdehnt.

2. Bildanzeigevorrichtung (10), aufweisend:
einen Flüssigkristallbildschirm (20);
ein Obergestell (30) und eine mittige Form (40) zum Befestigen und Halten des Flüssigkristallbildschirms (20);
wobei eine Rückbeleuchtungseinheit (50) nach Anspruch 1 unter dem Flüssigkristallbildschirm (20) angeordnet ist und Licht zum Flüssigkristallbildschirm (20) ausstrahlt.

## Revendications

1. Unité de rétroéclairage (50) comprenant :
une plaque guide de lumière (70) ;
un module de sources de lumière (80) comportant une pluralité de sources de lumière (81) émettant de la lumière vers une surface latérale (71) de la plaque guide de lumière ;
un châssis inférieur (60) supportant la plaque guide de lumière et le module de sources de lumière ; et
une unité de maintien d'espace (90) maintenant un espace d'une largeur constante entre la surface latérale de la plaque guide de lumière et la pluralité de sources de lumière du module de sources de lumière quand une longueur de la plaque guide de lumière est modifiée ;
l'unité de maintien d'espace comprenant une pluralité d'éléments de fixation pour fixer la plaque guide de lumière et le module de sources de lumière au châssis inférieur,
la pluralité d'éléments de fixation (90) comprenant une pluralité de goujons fixés à une surface inférieure du châssis inférieur (60),
la plaque guide de lumière (70) et le module de sources de lumière (80) comprenant une pluralité de trous traversants (63, 85, 73) dans lesquels est insérée la pluralité de goujons,
**caractérisée en ce que** :
le module de sources de lumière est disposé sur un seul côté de la plaque guide de lumière, et
l'unité de maintien d'espace comprend une pluralité d'éléments de fixation pour fixer la plaque guide de lumière et le module de sources de lumière au châssis inférieur,
la pluralité d'éléments de fixation (90) comprenant une pluralité de goujons fixés à une surface inférieure du châssis inférieur (60),
la plaque guide de lumière (70) et le module de sources de lumière (80) comprenant une pluralité de trous traversants (63, 85, 73) dans lesquels est insérée la pluralité de goujons,
dans laquelle
les éléments de fixation de l'unité de maintien d'espace (90) sont uniquement disposés vers l'extrémité de la plaque guide de lumière adjacente au module de sources de lumière de telle sorte que
une surface latérale de la plaque guide de lumière qui n'est pas tournée vers le module de sources de lumière (80) est disposée pour se prolonger dans la direction de la longueur (B).

2. Appareil d'affichage d'images (10) comprenant :
un panneau de cristaux liquides (20) ;
un châssis supérieur (30) et un moule central (40) pour fixer et supporter le panneau de cristaux liquides (20) ;
dans lequel une unité de rétroéclairage (50) selon la revendication 1 est disposée sous le panneau de cristaux liquides (20) et émet de la lumière vers le panneau de cristaux liquides (20).
